# EUROPÄISCHE PATENTANMELDUNG

(11) **EP 4 704 373 A1**
(43) Veröffentlichungstag der Anmeldung: **04.03.2026**
(21) Anmeldenummer: 24197902.0
(22) Anmeldetag: 02.09.2024
(51) Int. Cl.: H04L 9/32, H04L 9/00

(54) **COMPUTERIMPLEMENTIERTES VERFAHREN ZUM ERSTELLEN VON SIGNIERTEN ZERTIFIKATEN**

(71) Anmelder: Research Industrial Systems Engineering (RISE) Forschungs-, Entwicklungs- und Grossprojektberatung GmbH, 2320 Schwechat (AT)
(72) Erfinder: SCHÖNBAUER, Franz, 1040 Wien (AT); GRECHENIG, Thomas, 1040 Wien (AT)
(74) Vertreter: Schwarz & Partner Patentanwälte GmbH

(57) **Zusammenfassung**

Computerimplementiertes Verfahren zum Erstellen von signierten Zertifikaten (Zert2), umfassend die Schritte:
- Erzeugen eines ersten privaten Schlüssels (Priv1), eines ersten öffentlichen Schlüssels (Pub1) und eines ersten Zertifikats (Zert1), wobei das erste Zertifikat (Zert1) den ersten öffentlichen Schlüssel (Pub1), eine Information des Zertifikatsinhaber (Inh) und einen ersten Gültigkeitszeitraum (T1, T2) umfasst,
- Erzeugen eines zweiten privaten Schlüssels (Priv2), eines zweiten öffentlichen Schlüssels (Pub2) und eines zweiten Zertifikats (Zert2), wobei das zweite Zertifikat (Zert2) den zweiten öffentlichen Schlüssel (Pub2), die Information des genannten Zertifikatsinhabers (Inh) und einen zweiten Gültigkeitszeitraum (T3, T4) umfasst, wobei der zweite Gültigkeitszeitraum (T3, T4) nach dem Beginn des ersten Gültigkeitszeitraumes (T1, T2) beginnt, wobei sich die Gültigkeitszeiträume des ersten Zertifikats (Zert1) und des zweiten Zertifikats (Zert2) bevorzugt überlappen,
- Signieren des zweiten Zertifikats (Zert2) mit dem ersten privaten Schlüssel (Zert1).

## Beschreibung

Die Erfindung betrifft ein computerimplementiertes Verfahren zum Erstellen von signierten Zertifikaten, bei dem Zertifikate in der Regel wie folgt erstellt werden: Erzeugen eines ersten privaten Schlüssels, eines ersten öffentlichen Schlüssels und eines ersten Zertifikats, wobei das erste Zertifikat den ersten öffentlichen Schlüssel, eine Information des Zertifikatsinhabers und einen ersten Gültigkeitszeitraum umfasst.

Zertifikate im Kontext der Verschlüsselung im Internet spielen eine zentrale Rolle bei der Sicherstellung der Sicherheit und Vertrauenswürdigkeit von Kommunikationsverbindungen. Diese Zertifikate können von Zertifizierungsstellen (Certificate Authorities, CAs) ausgegeben oder von diesen signiert werden und sind wesentlicher Bestandteil der Public-Key-Infrastruktur (PKI). Durch die Verwendung von Zertifikaten können Benutzer sicherstellen, dass sie mit einem gewünschten Kommunikationspartner kommunizieren (und nicht mit einem betrügerischen Dritten) und dass die Daten, die sie senden und empfangen, verschlüsselt und vor unbefugtem Zugriff geschützt sind. Ein Zertifikat enthält einen öffentlichen Schlüssel, der zur Verschlüsselung von Nachrichten verwendet wird, sowie Informationen über den Zertifikatsinhaber, die durch die Zertifizierungsstelle überprüft wurden.

Der Gültigkeitszeitraum eines Zertifikats ist ein wesentlicher Aspekt, der die Sicherheit und Vertrauenswürdigkeit eines Zertifikats beeinflusst. Er bestimmt, wie lange ein Zertifikat als gültig und vertrauenswürdig betrachtet wird. Innerhalb dieses Zeitraums wird davon ausgegangen, dass der zugehörige private Schlüssel sicher ist und nicht kompromittiert wurde. Der Gültigkeitszeitraum wird durch das Ausstellungsdatum und das Ablaufdatum des Zertifikats definiert. Es ist wichtig, dass dieser Zeitraum sorgfältig gewählt wird, um ein angemessenes Gleichgewicht zwischen Sicherheit und Benutzerfreundlichkeit zu gewährleisten.

Nach Ablauf des Gültigkeitszeitraums eines Zertifikats gilt dieses nicht mehr als vertrauenswürdig. Dies bedeutet, dass jede Verbindung, die versucht, das abgelaufene Zertifikat zu verwenden, als unsicher betrachtet wird. Benutzer und Systeme, die auf die Integrität und Authentizität von Zertifikaten angewiesen sind, müssen in der Lage sein, abgelaufene Zertifikate zu erkennen und entsprechende Maßnahmen zu ergreifen. In der Praxis bedeutet dies häufig, dass das abgelaufene Zertifikat durch ein neues, gültiges Zertifikat ersetzt werden muss. Zertifikatsinhaber sind daher dazu angehalten, vor Ablauf des Gültigkeitszeitraums eine Erneuerung zu beantragen.

Der Prozess der Erneuerung von Zertifikaten beinhaltet typischerweise die Erstellung eines neuen Schlüsselpaares (privater und öffentlicher Schlüssel) und die Ausstellung eines neuen Zertifikats durch die Zertifizierungsstelle. Dies trägt zur Aufrechterhaltung eines hohen Sicherheitsniveaus bei, da regelmäßig neue Schlüssel generiert und verwendet werden, wodurch das Risiko einer Kompromittierung minimiert wird. Die Zertifizierungsstellen spielen hierbei eine wichtige Rolle, indem sie sicherstellen, dass die Identität des Antragstellers überprüft und das neue Zertifikat ordnungsgemäß ausgestellt wird.

Probleme treten jedoch auf, wenn die Zertifizierungsstelle selbst kompromittiert wird. In diesem Fall könnte sich ein unbefugter Dritter im Namen einer anderen Institution ausgeben und sich von der kompromittierten Zertifizierungsstelle ein Zertifikat ausstellen bzw. signieren lassen. Es ist das Ziel der vorliegenden Erfindung, derartige Unsicherheiten auszuschließen.

Dieses Ziel wird durch ein computerimplementiertes Verfahren zum Erstellen von signierten Zertifikaten gelöst, umfassend die Schritte:
- Erzeugen eines ersten privaten Schlüssels, eines ersten öffentlichen Schlüssels und eines ersten Zertifikats, wobei das erste Zertifikat den ersten öffentlichen Schlüssel, eine Information des Zertifikatsinhabers (d.h. jener Entität, die den ersten privaten Schlüssel besitzt, der zum ersten öffentlichen Schlüssel zugehörig ist) und einen ersten Gültigkeitszeitraum umfasst,
- Erzeugen eines zweiten privaten Schlüssels, eines zweiten öffentlichen Schlüssels und eines zweiten Zertifikats, wobei das zweite Zertifikat den zweiten öffentlichen Schlüssel, die Information des genannten Zertifikatsinhabers und einen zweiten Gültigkeitszeitraum umfasst, wobei der zweite Gültigkeitszeitraum nach dem Beginn des ersten Gültigkeitszeitraumes beginnt, wobei sich die Gültigkeitszeiträume des ersten Zertifikats und des zweiten Zertifikats bevorzugt überlappen, und
- Signieren des zweiten Zertifikats mit dem ersten privaten Schlüssel.

Durch die erfindungsgemäße Lösung wird eine Kette von Zertifikaten erzielt, die sich in temporaler Hinsicht zumindest auf zumindest ein zuvor ausgelaufenes Zertifikat rückverfolgen lässt. Die neue Signatur, hierin auch Ketten-Signatur genannt, kann durch Hashen des Inhalts des zweiten Zertifikats (und gegebenenfalls einer oder mehrerer weiterer Signaturen wie einer Root-Signatur) und anschließendem Verschlüssen mit dem ersten privaten Schlüssel erzeugt werden.

Durch die erfindungsgemäße Lösung wird folgendes Problem gelöst: Wenn eine Zertifizierungsstelle im Zeitraum zwischen dem Ausstellen des ersten Zertifikats und des zweiten Zertifikats kompromittiert wurde, und ein Dritter versucht, sich im Namen des Zertifikatsinhabers des ersten Zertifikats von der kompromittierten Zertifizierungsstelle ein neues zweites Zertifikat ausstellen bzw. signieren zu lassen, wird dieser weiterhin nicht im Besitz ersten privaten Schlüssels sein und kann somit das neue zweite Zertifikat nicht signieren, selbst wenn er dieses von der kompromittierten Zertifizierungsstelle signieren lassen könnte.

Die erfindungsgemäße Lösung schafft somit eine Absicherung gegenüber der Fälschung von Zertifikaten, wenn eine Zertifizierungsstelle kompromittiert wird, da ein neu ausgestelltes Zertifikat nicht oder nicht nur mittels des privaten Schlüssels der Zertifizierungsstelle signiert wird, sondern auch mittels des privaten ersten Schlüssels.

Die Überprüfung der Echtheit des mittels des ersten privaten Schlüssels signierten zweiten Zertifikats kann durch das erste Zertifikat erfolgen, das wiederum von der Zertifizierungsstelle signiert wurde, jedoch zu einem früheren Zeitpunkt, bei dem davon ausgegangen werden kann, dass die Zertifizierungsstelle damals noch nicht kompromittiert worden ist.

In dem erfindungsgemäßen Verfahren wird üblicherweise vorgesehen, dass Verfahren weiters die folgenden Schritte umfasst:
- Signieren des ersten Zertifikats durch eine Zertifizierungsstelle mittels eines privaten Root-Schlüssels, der zu einem öffentlichen Root-Schlüssel zugehörig ist, und
- bevorzugt Signieren des zweiten Zertifikats durch eine bzw. die Zertifizierungsstelle mittels des privaten Root-Schlüssels, der zu dem öffentlichen Root-Schlüssel zugehörig ist.

Wenn das erste Zertifikat durch die Zertifizierungsstelle signiert wurde, kann bereits durch das Signieren des zweiten Zertifikats mit dem privaten Schlüssel des ersten Zertifikats eine temporale Signatur-Rückverfolgung zur Zertifizierungsstelle erfolgen, ohne dass die Zertifizierungsstelle das zweite Zertifikat signieren muss.

Um die Sicherheitsstufe zu erhöhen, wird jedoch vorgesehen, dass die Zertifizierungsstelle auch das zweite Zertifikat signiert. Hierfür wird in der Regel vorgesehen, dass das zweite Zertifikat vom Zertifikatsinhabers erstellt und mit dem ersten privaten Schlüssel signiert wird, danach zur Zertifizierungsstelle gesandt und dort mittels des privaten Root-Schlüssels signiert wird. Bevorzugt kann beim Signieren mittels des privaten Root-Schlüssels ein Hash-Wert des Inhalts des zweiten Zertifikats und der Signatur mit dem ersten privaten Schlüssel gebildet werden, was eine besonders hohe Sicherheitsstufe bildet, da die Ketten-Signatur mit dem ersten privaten Schlüssel nicht nachträglich hinzugefügt werden kann.

Das Verifizieren des zweiten Zertifikats durch eine weitere Recheneinheit eines Drittens kann wie folgt vorgenommen werden:
- Überprüfen des signierten zweiten Zertifikats mittels des im ersten Zertifikat enthaltenen ersten öffentlichen Schlüssels, und
- bevorzugt, Überprüfen des signierten ersten und/oder zweiten Zertifikats mittels des öffentlichen Root-Schlüssels, der bevorzugt einem Root-Zertifikat entnommen wurde.

Das Verifizieren des zweiten Zertifikats kann beispielsweise erfolgen, wenn der Dritte bzw. die weitere Recheneinheit eine Nachricht empfängt, die mit dem zweiten privaten Schlüssel signiert wurde. Hierfür werden die folgenden Schritte eingesetzt:
- Signieren einer Nachricht mit dem zweiten privaten Schlüssel durch den Zertifikatsinhaber,
- Senden der signierten Nachricht vom Zertifikatsinhaber an die weitere Recheneinheit (im allgemeinen an einen Empfänger),
- Durch die weitere Recheneinheit bzw. den Empfänger, Empfangen des ersten und des zweiten Zertifikats,
- Verifizieren des zweiten Zertifikats gemäß den obigen Verfahrensschritten und
- Überprüfen der signierten Nachricht mittels des im zweiten Zertifikat enthaltenen zweiten öffentlichen Schlüssels.

Die Reihenfolge der genannten Schritte ist nicht zwingend, sodass die beiden Überprüfungsschritte auch umgekehrt erfolgen können und/oder das erste und zweite Zertifikat bereits vor der Nachricht empfangen werden.

Weiters kann ein Dritter bzw. die weitere Recheneinheit eine Nachricht mit dem zweiten öffentlichen Schlüssel verschlüsseln und an die erste Recheneinheit senden. Hierfür werden die folgenden Schritte eingesetzt:
- Durch die weitere Recheneinheit, Empfangen des ersten und des zweiten Zertifikats,
- Verifizieren des zweiten Zertifikats gemäß den obigen Verfahrensschritten,
- Verschlüsseln einer Nachricht mit dem zweiten öffentlichen Schlüssel,
- Senden der verschlüsselten Nachricht an den Zertifikatsinhaber, und
- Entschlüsseln der verschlüsselten Nachricht mittels des zweiten privaten Schlüssels.

Das Signieren des zweiten Zertifikats mit dem ersten privaten Schlüssel erfolgt in der Regel dadurch, dass das zweite Zertifikat gehasht (gegebenenfalls zusammen mit der Root-Signatur) wird und mit dem ersten privaten Schlüssel signiert wird. In anderen Worten wird eingangs der gesamte Inhalt des Zertifikats mit einer kryptografischen Hashfunktion, wie z.B. SHA-256, in einen Hashwert umgewandelt. Ein Hashwert ist eine eindeutige, fixe Länge darstellende Abbildung des Zertifikatsinhalts. Der Hashwert wird dann mit dem ersten privaten Schlüssel verschlüsselt. Dieser verschlüsselte Hashwert ist die digitale Signatur des Zertifikats. Wenn das zweite Zertifikat auch mit dem privaten Root-Schlüssel signiert werden soll, wird wiederum das zweite Zertifikat gehasht (gegebenenfalls zusammen mit der Ketten-Signatur)und mit dem privaten Root-Schlüssel verschlüsselt. In diesem Fall werden zwei Signaturen vorliegen.

In einer bevorzugten Variante können sich der erste Gültigkeitszeitraum und der zweite Gültigkeitszeitraum überlappen. Dadurch ist eine kontinuierliche Kette an Zertifikaten gegeben. Alternativ könnte der zweite der zweite Gültigkeitszeitraum auch unmittelbar an den ersten Gültigkeitszeitraum anschließen oder es könnte einen zeitlichen Abstand zwischen dem ersten und dem zweiten Gültigkeitszeitraum geben.

Die vorstehenden Ausführung wurden in Anbetracht eines ersten Zertifikats und eines zweiten Zertifikat getroffen. Das Verfahren ist jedoch auf viele weitere Zertifikate erweiterbar, sodass eine Kette von Zertifikaten eines einzigen Zertifikatsinhabers definiert werden kann. Im Allgemeinen kann es zumindest ein weiteres Zertifikat des genannten Zertifikatsinhabers geben, dessen Gültigkeitszeitraum vor dem Beginn des ersten Gültigkeitszeitraumes beginnt oder nach dem Beginn des zweiten Gültigkeitszeitraumes beginnt, sodass eine zeitliche Kette von Zertifikaten des genannten Zertifikatsinhabers vorliegt, in der ein Stammzertifikat den Beginn der Kette definiert. Bevorzugt überlappen sich die Gültigkeitszeiträume von jeweils zwei aufeinanderfolgenden Zertifikaten und/oder bevorzugt überlappen sich zu keinem Zeitpunkt drei der Gültigkeitszeiträume.

In der vorgenannten Variante der Kette mit zumindest drei Zertifikaten können insbesondere folgende drei Varianten vorgesehen sein.

In der ersten Variante ist jedes Zertifikat der Kette, mit Ausnahme des Stammzertifikats, mit dem privaten Schlüssel signiert, der dem jeweils vorhergehenden Zertifikat zugehörig ist. Hier wird ein Dritter, der das letzte Zertifikat der Kette der Zertifikate verifizieren will, alle Zertifikate des Zertifikatsinhabers abrufen. Beginnend beim letzten Zertifikat der Kette kann der Dritte nun überprüfen, ob ein Zertifikat mit einem privaten Schlüssel signiert wurde, der dem jeweils vorhergegangenen Zertifikat zugehörig ist. In anderen Worten wird jedes Zertifikat der Kette von Zertifikaten verifiziert. Weiters kann jedes der Zertifikate in der Kette von der Zertifizierungsstelle signiert sein, wobei diese Root-Signatur auch überprüft werden kann.

In einer zweiten Variante kann jedes Zertifikat der Kette, mit Ausnahme des Stammzertifikats, mit allen privaten Schlüsseln signiert sein, die allen vorhergehenden Zertifikaten zugehörig sind. Um ein letztes Zertifikat der Kette der Zertifikate zu verifizieren, werden auch hier alle Zertifikate des Zertifikatsinhabers abgerufen. Das letzte Zertifikat der Kette wird eine Anzahl von (n-1) Ketten-Signaturen aufweisen, wobei n die Länge der Kette ist. Es werden alle Kettensignaturen des letzten Zertifikats in der Kette überprüft, aber die vorhergehenden Zertifikate müssen nicht überprüft werden. Weiters kann jedes der Zertifikate in der Kette (d.h. auch das letzte Zertifikat in der Kette) von der Zertifizierungsstelle signiert sein, wobei diese Root-Signatur auch überprüft werden kann. Hier können somit n Signaturen des letzten Zertifikats verifiziert werden.

In einer dritten Variante kann jedes Zertifikat der Kette, mit Ausnahme des Stammzertifikats, nur mit dem privaten Schlüssel signiert sein, der dem Stammzertifikat zugehörig ist. In anderen Worten ist jedes Zertifikat der Kette nur mit einer Ketten-Signatur verschlüsselt und gegebenenfalls mit einem Root-Zertifikat. Dies kann ein schnelles Verfahren zur Verifizierung bieten, bei dem dennoch eine hohe Sicherheit gegenüber kompromittierten Zertifizierungsstellen geboten wird.

Besonders bevorzugt umfassen alle Zertifikate der Kette oder zumindest das erste und das zweite Zertifikat eine streng monoton steigende Seriennummer. In anderen Worten weisen alle Zertifikate eine Seriennummer auf, wobei ein Zertifikat, das einen früheren Gültigkeitszeitraum als ein weiteres Zertifikat aufweist, eine kleinere Seriennummer aufweist als das weitere Zertifikat. Die streng monoton steigenden Seriennummern können, müssen aber nicht, linear ansteigen. Wenn die Funktion zur Ermittlung der Seriennummern bekannt ist, kann auch erkannt werden, ob ein Zertifikat unmittelbar vor einem anderen liegt bzw. ob alle Zertifikate der Kette vorliegen. Die Seriennummern haben den Zweck, dass überprüft werden kann, ob ein Zertifikat tatsächlich vor, unmittelbar vor, nach oder unmittelbar nach einem anderen Zertifikat liegt.

In einem weiteren Aspekt schafft die Erfindung eine Recheneinheit oder System zum Erstellen von signierten Zertifikaten, wobei die Recheneinheit dazu ausgebildet ist, das genannte Verfahren durchzuführen.

In einem weiteren Aspekt schafft die Erfindung eine computerimplementierte Datenstruktur, gebildet durch das eingangs erläuterte signierte zweite Zertifikat. Bei dieser Datenstruktur kann insbesondere vorgesehen sein, dass das zweite Zertifikat mit den privaten Schlüsseln aller vorhergehenden Zertifikate signiert ist.

Um die vorliegende Erfindung besser zu veranschaulichen und deren Funktionsweise detailliert zu erklären, wird im Folgenden auf die beigefügte Figur Bezug genommen. Diese Abbildung dient der Verdeutlichung der technischen Merkmale der Erfindung. Die nachfolgende Beschreibung der Figur soll dazu beitragen, die strukturellen und funktionalen Eigenschaften der Erfindung eingehend zu verstehen und deren Vorteile und technischen Fortschritte gegenüber dem Stand der Technik zu erläutern. Darin zeigt:

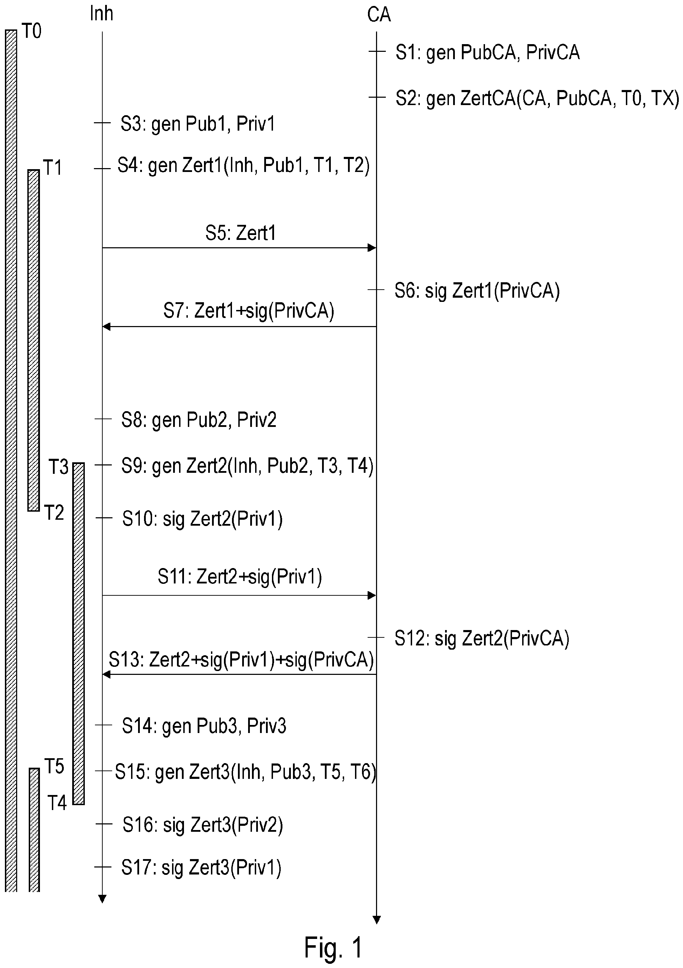

Figur 1 das erfindungsgemäße Verfahren in einem zeitlichen Ablauf.

Gemäß Figur 1 sind zwei Zeitstrahle dargestellt. Der erste, linke Zeitstrahl kennzeichnet die Aktionen, die durch einen sogenannten Zertifikatsinhaber Inh durchgeführt werden. Der Zertifikatsinhaber Inh kann durch eine Recheneinheit verwirklicht sein und stellt einen Kommunikationsteilnehmer dar, der mittels eines Public/Private-Schlüsselschemas mit anderen Kommunikationsteilnehmern kryptografisch sicher kommunizieren will. Unter "kryptografisch sicher kommunizieren" wird hierin verstanden, dass Nachrichten mittels des öffentlichen Schlüssels eines Empfängers verschlüsselt werden können und mittels eines eigenen privaten Schlüssels des Senders signiert werden können.

Der rechte Zeitstrahl in Figur 1 kennzeichnet die Aktionen, die durch eine sogenannte Zertifizierungsstelle ("Certificate Authority") CA durchgeführt werden. Ersichtlich ist, dass die Zertifizierungsstelle CA in einem ersten Schritt S1 einen privaten Root-Schlüssel PrivCA und einen öffentlichen Root-Schlüssel PubCA erzeugt. Hieraus kann in einem zweiten Schritt S2 ein Root-Zertifikat ZertCA erstellt werden, das Informationen über die Zertifizierungsstelle CA, den öffentlichen Root-Schlüssel PubCA, einen Beginn T0 des Beginns der Gültigkeitsdauer des Root-Zertifikats ZertCA und ein Ende T0 der Gültigkeitsdauer des Root-Zertifikat ZertCA umfasst. Dies ist aus dem Stand der Technik bekannt.

Damit der Zertifikatsinhaber Inh kryptografisch sicher kommunizieren kann, erzeugt dieser in einem dritten Schritt S3 einen ersten privaten Schlüssels Priv1 und einen ersten öffentlichen Schlüssel Pub1. Dies kann gemäß gängigen Algorithmen erfolgen, z.B. mittels RSA, DSA, ECDSA oder EdDSA.

Weiters erzeugt der Zertifikatsinhaber Inh in einem vierten Schritt S4 ein erstes Zertifikat Zert1, das den ersten öffentlichen Schlüssel Priv1, eine Information über den Zertifikatsinhaber Inh, und einen ersten Gültigkeitszeitraum umfasst, der durch den Beginn T1 der Gültigkeitsdauer des ersten Zertifikats Zert1 und das Ende T2 der Gültigkeitsdauer des ersten Zertifikats Zert1 definiert sein kann.

Nun sendet der Zertifikatsinhaber Inh das erste Zertifikat Zert1 in einem fünften Schritt S5 an die Zertifizierungsstelle CA, die dieses erste Zertifikat Zert1 in einem sechsten Schritt S6 mit dem privaten Root-Schlüssel PrivCA signiert. Hierfür wird das erste Zertifikat Zert1 mittels eines vorgegebenen Algorithmus gehasht und dann mit dem Root-Schlüssel PrivCA signiert.

Durch die genannten Schritte entsteht die digitale Signatur sig(PrivCA), die zusammen mit dem Zertifikatsinhalt Zert1 gespeichert wird. Das resultierende Dokument Zert1+sig(PrivCA) ist das durch die Zertifizierungsstelle CA signierte Zertifikat. Die Signatur sig(PriCA) ermöglicht es jedem, der das signierte Zertifikat Zert1 erhält, die Authentizität und Integrität des Zertifikats zu überprüfen (d.h. die Signatur bzw. das signierte Zertifikat zu validieren), indem er das Root-Zertifikat ZertCA abruft, den öffentlichen Root-Schlüssel PubCA aus diesem entnimmt und durch Entschlüsseln der Signatur sig(PriCA) den Hash-Wert gewinnt. Dieser Hashwert kann mit einem Hash-Wert verglichen werden, der durch hashen des Inhalts des ersten Zertifikats Zert1 mit der gleichen kryptografischen Hashfunktion, die bei der Erstellung der Signatur verwendet wurde (z.B. SHA-256), gewonnen wird. Stimmen die Hashwerte überein, bestätigt dies die Integrität und Authentizität des ersten Zertifikats Zert1. Wenn die Hashwerte nicht übereinstimmen, bedeutet dies, dass der Inhalt des Zertifikats verändert wurde oder die Signatur nicht gültig ist. In diesem Fall sollte das Zertifikat als nicht vertrauenswürdig betrachtet werden.

An dieser Stelle sei festgehalten, dass das Erstellen des ersten Zertifikats Zert1 an sich auch in der Zertifizierungsstelle CA erfolgen kann, wenn der Zertifikatsinhaber Inh den ersten öffentlichen Schlüssen Pub1 und seine Informationen (d.h. die Informationen über den Zertifikatsinhaber Inh des ersten öffentlichen Schlüssels Pub1) an die Zertifizierungsstelle CA sendet. Die Zertifizierungsstelle kann so das erste Zertifikat Zert1 erzeugen und es unmittelbar danach signieren.

An dieser Stelle sei festgehalten, dass das Signieren durch die Zertifizierungsstelle CA keinesfalls zwingend ist und auch entfallen könnte, z.B. wenn der Zertifikatsinhaber Inh die Zertifizierungsstelle CA selbst ist.

Das signierte erste Zertifikat Zert1 kann in einem siebten Schritt S7 an den Zertifikatsinhaber Inh zurückgesandt werden und/oder in der Zertifizierungsstelle CA aufbewahrt werden und dort Dritten zur Verfügung gestellt werden.

Wenn sich nun das Ende T2 des Gültigkeitszeitraumes des ersten Zertifikats Zert1 nähert, oder wenn dieses bereits überschritten wurde, kann mit dem Erstellen eines zweiten Zertifikats Zert2 begonnen werden, das einen Beginn T3 nach dem Beginn T1 des Gültigkeitszeitraumes des ersten Zertifikats Zert1 aufweisen soll. Bevorzugt können sich die Gültigkeitszeiträume der beiden Zertifikate Zert1, Zert2 überlappen, d.h. T3<T2, oder der Beginn T3 des Gültigkeitszeitraums des zweiten Zertifikats Zert2 kann mit dem Ende T2 des Gültigkeitszeitraums des ersten Zertifikats Zert1 übereinstimmen, d.h. T3=T2.

Das zweite Zertifikat Zert2 wird analog zum ersten Zertifikat Zert1 durch den Zertifikatsinhaber Inh oder durch die Zertifizierungsstelle CA erstellt. In anderen Worten wird eingangs in einem achten Schritt S8 der zweite private Schlüssel Priv2 und der zweite öffentliche Schlüssel Pub2 erzeugt, analog zu dem ersten privaten Schlüssel Priv1 und dem ersten öffentlichen Schlüssel Pub1. Danach wird in einem neunten Schritt S9 das zweite Zertifikat Zert2 erzeugt, wobei das zweite Zertifikat Zert2 den zweiten öffentlichen Schlüssel Pub2, die Information des Zertifikatsinhabers Inh und den zweiten Gültigkeitszeitraum T3, T4 umfasst.

Erfindungsgemäß wird nun das zweite Zertifikat Zert2 in einem zehnten Schritt S10 mittels des ersten privaten Schlüssels Priv1 signiert. Dies kann nur durch den Zertifikatsinhaber Inh selbst erfolgen, da nur dieser den ersten privaten Schlüssel Priv1 besitzt. Somit ist diese Signatur sig(Priv1) ein Zeichen dafür, dass der Aussteller der Signatur sig(Priv1) jener ist, der der Zertifikatsinhaber Inh des nun abgelaufenen ersten Zertifikats Zert1 war.

Wenn nun ein Dritter das derart signierte zweite Zertifikat Zert2+sig(Priv1) erhält, kann dieses validiert werden. Der Dritte kann das zweite Zertifikat Zert2 benutzen, um z.B. eine vom Zertifikatsinhaber Inh erhaltene Nachricht auf Authentizität und Integrität zu überprüfen, oder um eine an den Zertifikatsinhaber Inh zu sendende Nachricht zu verschlüsseln. Das Validieren des zweiten Zertifikats Zert2 kann wie folgt erfolgen. Zuerst wird das bereits abgelaufene erste Zertifikat Zert1 abgerufen, das wie oben ausgeführt von der Zertifizierungsstelle CA signiert wurde, d.h. als Zert1+sig(PrivCA). Das Abrufen kann aus einem internen Speicher des Dritten, von der Zertifizierungsstelle CA, vom Zertifikatsinhaber Zert1 oder von einer anderen Quelle erfolgen. Dann wird das mit dem ersten privaten Schlüssel signierte zweite Zertifikat Zert2+sig(Priv1) mittels des im ersten Zertifikat Zert1 enthaltenen ersten öffentlichen Schlüssel Pub1 überprüft, was analog zur oben ausgeführten Methode zum Überprüfen des ersten Zertifikats Zert1+sig(PrivCA) erfolgt, d.h. die Signatur sig(Priv1) wird mit dem ersten öffentlichen Schlüssel Pub1 entschlüsselt, um einen Hash-Wert zu gewinnen. Gleichsam wird das zweite Zertifikat Zert2 mittels desselben Hash-Algorithmus gehasht, mit dem auch die Signatur erzeugt wurde. Dann wird verglichen, ob die Hashwerte übereinstimmen. Wenn dies der Fall ist, kann darauf geschlossen werden, dass das zweite Zertifikat Zert2 von jenem Zertifikatsinhaber Inh signiert wurde, der auch das (veraltete) erste Zertifikat Zert1 erzeugt hat, da nur dieser Zertifikatsinhaber Inh den ersten privaten Schlüssel Priv1 besitzt.

Weiters kann das signierte erste Zertifikat Zert1+sig(PrivCA) validiert werden, wie oben ausgeführt wurde. Dadurch kann festgestellt werden, dass das erste Zertifikat Zert1 zum Zeitpunkt T0 von der Zertifizierungsstelle CA signiert wurde. Bevorzugt ist zum Zeitpunkt des Validierens das Zertifikat ZertCA der Zertifizierungsstelle CA noch gültig.

Mit dem beschriebenen Verfahren kann somit eine zeitliche Kette von Zertifikaten Zert1, Zert2 gebildet werden, sodass nachvollzogen werden kann, dass alle Zertifikate Zert1, Zert2 auch tatsächlich vom selben Zertifikatsinhaber Inh stammen, unabhängig davon, ob die Zertifizierungsstelle CA im Zeitraum T0-T3 kompromittiert wurde. Um hohe Sicherheitsmaßstäbe einzuhalten, wird jedoch üblicherweise das zweite Zertifikat Zert2 von der Zertifizierungsstelle CA signiert, d.h. mit oder ohne der Signatur sig(Priv1) in einem Schritt S11 an die Zertifizierungsstelle CA gesandt, dort gehasht (wobei beim Hashen nur der Inhalt des zweiten Zertifikats Zert2 oder auch das zweite Zertifikat Zert2 und die Signatur sig(Priv1) gehasht werden können) und danach mit dem privaten Root-Schlüssel PrivCA verschlüsselt, d.h. in einem Schritt S12 von der Zertifizierungsstelle CA signiert. Das derart signierte zweite Zertifikat Zert2+sig(Priv1)+sig(PrivCA) kann dann in einem Schritt S13 optional wieder an den Zertifikatsinhaber Inh zurückgesandt werden oder Dritten auf eine andere Art und Weise zur Verfügung gestellt werden.

Alternativ kann das zweite Zertifikat Zert2 auch zuerst von der Zertifizierungsstelle CA signiert werden, bevor es mit dem ersten privaten Schlüssel Priv1 signiert wird. In diesem Fall kann beim Signieren mittels des ersten privaten Schlüssels Priv1 nur der Inhalt des zweiten Zertifikats Zert2 oder auch das zweite Zertifikat Zert2 und die Signatur sig(CA) gehasht und dann signiert bzw. verschlüsselt werden.

Wenn sich nun das Ende T4 des Gültigkeitszeitraumes des zweiten Zertifikats Zert2 nähert, oder wenn dieses bereits überschritten wurde, kann mit dem Erstellen eines dritten Zertifikats Zert3 begonnen werden, das einen Beginn T5 nach dem Beginn T3 des Gültigkeitszeitraumes des zweiten Zertifikats Zert2 aufweisen soll. Auch hier können sich das zweite Zertifikat Zert2 und das dritte Zertifikat Zert3 überlappen oder unmittelbar aufeinanderfolgen.

Bei dem dritten Zertifikat Zert3 kann im Wesentlichen wie bei dem zweiten Zertifikat vorgegangen werden, d.h. in einem in einem Schritt S 14 werden zuerst der dritte private Schlüssel Priv3 und der dritte öffentliche Schlüssel Pub3 erzeugt, dann in einem Schritt S 15 das dritte Zertifikat Zert3 erzeugt. In Schritten S 16 und S 17 kann dieses mit zumindest einem privaten Schlüssel Priv1, Priv2 eines der vorhergegangenen Zertifikate Zert3 signiert werden. Weiters könnte das dritte Zertifikat Zert3 von der Zertifizierungsstelle CA signiert werden, wie oben beschrieben wurde.

In einer ersten Variante wird das dritte Zertifikat Zert3 nur mittels des zweiten privaten Schlüssels Priv2 signiert, der zu dem zweiten Zertifikats Zert2 zugehörig ist, das unmittelbar vor dem dritten Zertifikat Zert3 liegt. Das "nur" bezieht sich hierbei auf Signaturen mittels anderer privater Schlüssel des Zertifikatsinhabers Inh. Zusätzlich zur genannten Ketten-Signatur kann das dritte Zertifikat Zert3 von der Zertifizierungsstelle Root-signiert werden, wie oben für das zweite Zertifikat beschrieben wurde.

In einer zweiten Variante könnte das dritte Zertifikat Zert3 mittels aller privater Schlüssel Priv2 signiert werden (wobei hier jeweils eine Signatur pro privatem Schlüssel erzeugt wird), die zu allen Zertifikaten Zert1, Zert2 zugehörig sind, die vor dem dritten Zertifikat Zert3 liegen. Beim Signieren kann jeweils nur der Inhalt des Zertifikats gehasht werden, oder bei zumindest einer Signatur kann vorgesehen werden, dass beim Hashen der Inhalt des Zertifikats und zumindest eine Ketten-Signatur gehasht werden. Zusätzlich zur genannten Signatur kann das dritte Zertifikat Zert3 von der Zertifizierungsstelle CA signiert werden, wie oben für das zweite Zertifikat Zert2 beschrieben wurde.

In einer dritten Variante könnte das dritte Zertifikat Zert3 nur mittels jenes privaten Schlüssels Priv1 signiert werden, der zu dem ersten Zertifikat Zert1 in der Kette der Zertifikate Zert1, Zert2, Zert3 zugehörig ist, das am Anfang der Kette liegt. Dieses Zertifikat Zert1 am Anfang der Kette wird als Stammzertifikat bezeichnet. Das "nur" bezieht sich hierbei auf Signaturen mittels anderer privater Schlüssel des Zertifikatsinhabers Inh. Zusätzlich zur genannten Ketten-Signatur kann das dritte Zertifikat Zert3 von der Zertifizierungsstelle signiert werden, wie oben für das zweite Zertifikat Zert2 beschrieben wurde.

Wenn zu einem späteren Zeitpunkt ein viertes, fünftes, sechstes, ... Zertifikat erstellt werden soll, kann wie oben beschrieben wie beim zweiten bzw. dritten Zertifikat Zert2, Zert3 vorgegangen werden. Insbesondere können diese Zertifikate nur mit dem privaten Schlüssel signiert werden, der dem unmittelbar vorhergegangenen Zertifikat oder dem Stammzertifikat zugehörig ist, oder mit allen privaten Schlüsseln signiert werden, die allen vorhergegangenen Zertifikaten zugehörig sind.

Nicht dargestellt ist, dass zur Vereinfachung der Validierung als fixer Bestandteil aller Zertifikate eine streng monoton steigende Seriennummer der Zertifikate in jedes Zertifikat eingefügt werden kann.

## Patentansprüche

1. Computerimplementiertes Verfahren zum Erstellen von signierten Zertifikaten (Zert2), umfassend die Schritte:
- Erzeugen eines ersten privaten Schlüssels (Priv1), eines ersten öffentlichen Schlüssels (Pub1) und eines ersten Zertifikats (Zert1), wobei das erste Zertifikat (Zert1) den ersten öffentlichen Schlüssel (Pub1), eine Information des Zertifikatsinhaber (Inh) und einen ersten Gültigkeitszeitraum (T1, T2) umfasst,
- Erzeugen eines zweiten privaten Schlüssels (Priv2), eines zweiten öffentlichen Schlüssels (Pub2) und eines zweiten Zertifikats (Zert2), wobei das zweite Zertifikat (Zert2) den zweiten öffentlichen Schlüssel (Pub2), die Information des genannten Zertifikatsinhabers (Inh) und einen zweiten Gültigkeitszeitraum (T3, T4) umfasst, wobei der zweite Gültigkeitszeitraum (T3, T4) nach dem Beginn des ersten Gültigkeitszeitraumes (T1, T2) beginnt, wobei sich die Gültigkeitszeiträume des ersten Zertifikats (Zert1) und des zweiten Zertifikats (Zert2) bevorzugt überlappen,
**dadurch gekennzeichnet, dass** das Verfahren den folgenden Schritt umfasst:
- Signieren des zweiten Zertifikats (Zert2) mit dem ersten privaten Schlüssel (Zert1).

2. Verfahren nach Anspruch 1, umfassend den Schritt:
- Signieren des ersten Zertifikats (Zert1) durch eine Zertifizierungsstelle (CA) mittels eines privaten Root-Schlüssels (PrivCA), der zu einem öffentlichen Root-Schlüssel (PubCA) zugehörig ist, und
- bevorzugt Signieren des zweiten Zertifikats (Zert2) durch eine bzw. die Zertifizierungsstelle (CA) mittels des privaten Root-Schlüssels (PrivCA), der zu dem öffentlichen Root-Schlüssel (PubCA) zugehörig ist.

3. Verfahren nach Anspruch 2, wobei das zweite Zertifikat (Zert2) vom Zertifikatsinhaber (Inh) erstellt und mit dem ersten privaten Schlüssel (Pub1) signiert wird, danach zur Zertifizierungsstelle (CA) gesandt und dort mittels des privaten Root-Schlüssels (PrivCA) signiert wird, wobei beim Signieren mittels des privaten Root-Schlüssels (PrivCA) bevorzugt ein Hash-Wert des Inhalts des zweiten Zertifikats und der Signatur mit dem ersten privaten Schlüssel (Zert1) gebildet wird.

4. Verfahren nach einem der Ansprüche 1 bis 3, umfassend die folgenden Schritte zum Verifizieren des zweiten Zertifikats (Zert2):
- Überprüfen des signierten zweiten Zertifikats (Zert2) mittels des im ersten Zertifikat (Zert1) enthaltenen ersten öffentlichen Schlüssels (Pub1) und
- bevorzugt, Überprüfen des signierten ersten und/oder zweiten Zertifikats (Zert1, Zert2) mittels des öffentlichen Root-Schlüssels (PubCA), der bevorzugt einem Root-Zertifikat (ZertCA) entnommen wurde.

5. Verfahren nach Anspruch 4 zum Verifizieren einer Nachricht, umfassend die Schritte:
- Signieren einer Nachricht mit dem zweiten privaten Schlüssel (Priv2),
- Senden der signierten Nachricht an einen Empfänger,
- Durch den Empfänger, Empfangen des ersten und des zweiten Zertifikats (Zert1, Zert2),
- Verifizieren des zweiten Zertifikats (Zert2), und
- Überprüfen der signierten Nachricht mittels des im zweiten Zertifikat (Zert2) enthaltenen zweiten öffentlichen Schlüssels (Pub2).

6. Verfahren nach Anspruch 4 oder 5 zum Entschlüsseln einer Nachricht, umfassend die Schritte:
- Empfangen des ersten und des zweiten Zertifikats (Zert2),
- Verifizieren des zweiten Zertifikats (Zert2),
- Verschlüsseln einer Nachricht mit dem zweiten öffentlichen Schlüssel (Pub2),
- Senden der verschlüsselten Nachricht an den Zertifikatsinhaber (Inh), und
- Entschlüsseln der verschlüsselten Nachricht mittels des zweiten privaten Schlüssels (Priv2).

7. Verfahren nach einem der vorhergehenden Ansprüche, wobei das Signieren des zweiten Zertifikats (Zert2) mit dem ersten privaten Schlüssel (Priv1) dadurch erfolgt, dass das zweite Zertifikat (Zert2) gehasht wird und mit dem ersten privaten Schlüssel (Priv1) signiert wird.

8. Verfahren nach einem der vorhergehenden Ansprüche, wobei sich der erste Gültigkeitszeitraum (T1, T2) und der zweite Gültigkeitszeitraum (T3, T4) überlappen.

9. Verfahren nach einem der vorhergehenden Ansprüche, wobei es zumindest ein weiteres Zertifikat (Zert3) des genannten Zertifikatsinhabers (Inh) gibt, dessen Gültigkeitszeitraum vor dem Beginn des ersten Gültigkeitszeitraumes beginnt oder nach dem Beginn des zweiten Gültigkeitszeitraumes beginnt, sodass eine zeitliche Kette von Zertifikaten (Zert1, Zert2, Zert3) des genannten Zertifikatsinhabers (Inh) vorliegt, in der ein Stammzertifikat den Beginn der Kette definiert.

10. Verfahren nach Anspruch 9, wobei jedes Zertifikat der Kette (Zert2, Zert3), mit Ausnahme des Stammzertifikats (Zert1), mit dem privaten Schlüssel (Priv1, Priv2) signiert ist, der dem jeweils vorhergehenden Zertifikat (Zert1, Zert2) zugehörig ist.

11. Verfahren nach Anspruch 9, wobei jedes Zertifikat (Zert2, Zert3) der Kette, mit Ausnahme des Stammzertifikats (Zert1), mit allen privaten Schlüsseln (Priv1, Priv2) signiert ist, die den jeweils vorhergehenden Zertifikaten (Zert1, Zert2) zugehörig sind.

12. Verfahren nach Anspruch 9, wobei jedes Zertifikat (Zert2, Zert3) der Kette, mit Ausnahme des Stammzertifikats (Zert1), nur mit dem privaten Schlüssel (Priv1) signiert ist, der dem Stammzertifikat (Zert1) zugehörig ist.

13. Verfahren nach einem der Ansprüche 1 bis 12, wobei alle Zertifikate (Zert1, Zert2, Zert3) eine streng monoton steigende Seriennummer umfassen.

14. Recheneinheit zum Erstellen von signierten Zertifikaten (Zert1, Zert2, Zert3), wobei die Recheneinheit dazu ausgebildet ist, das Verfahren nach einem der Ansprüche 1 bis 12 durchzuführen.

15. Computerimplementierte Datenstruktur, gebildet durch das gemäß Anspruch 1 erzeugte signierte zweite Zertifikat (Zert2), wobei das zweite Zertifikat (Zert2) bevorzugt mit den privaten Schlüsseln aller vorhergehenden Zertifikate signiert ist.
